# FASCICULE DE BREVET EUROPEEN

(11) **EP 1 337 806 B1**
(45) Date de publication et mention de la délivrance du brevet: **10.12.2008**
(21) Numéro de dépôt: 01993812.5
(22) Date de dépôt: 08.11.2001
(51) Int. Cl.: G01C 21/02, G01C 25/00, B64G 1/36, G05D 1/08

(54) **BANC DE TEST AU SOL D'UN SENSEUR STELLAIRE**
BODENPRÜFBANK FÜR EINEN STELLARSENSOR
GROUND TEST BENCH FOR STELLAR SENSOR

(30) Priorité: 08.11.2000 FR 0014334
(43) Date de publication de la demande: 27.08.2003
(73) Titulaire: CENTRE NATIONAL D'ETUDES SPATIALES, F-75001 Paris (FR)
(72) Inventeur: PITTET, Christelle, F-31320 Castanet Tolosan (FR); JULIO, Jean-Marc, F-31850 Montrabe (FR); MIGNOT, Jean, F-31520 Ramonville (FR)
(74) Mandataire: Colas, Jean-Pierre
(86) Numéro de dépôt international: PCT/FR2001/003465
(87) Numéro de publication internationale: WO 2002/039062

(56) Documents cités:
- EP-A- 0 618 541
- WESSLING F C ET AL: "THE STAR FIELD SIMULATOR FOR THE SPACELAB INSTRUMENT POINTING SYSTEM FIXED HEAD STAR TRACKERS" PROCEEDINGS OF THE SPIE,SPIE, BELLINGHAM, VA,US, vol. 2221, juillet 1994 (1994-07), pages 116-127, XP001014154 cité dans la demande

## Description

La présente invention est relative à un banc de test au sol d'un senseur stellaire destiné à faire partie d'un système de contrôle d'attitude d'un satellite artificiel.

Un tel banc de test peut comprendre des moyens de génération et d'animation d'une portion de ciel représentative de celle observée par un senseur stellaire formant partie du système de contrôle d'attitude d'un satellite artificiel en orbite. Dans un tel système le senseur stellaire permet, à partir des positions d'étoiles présentes dans son champ de vision, de déterminer avec précision l'attitude du satellite et de calculer les corrections d'attitude à exécuter pour que le satellite rallie une attitude de consigne.

L'article intitulé "The star field simulator for the Spacelab instrument pointing system fixed head star trackers", auteurs : F.C. Wessling III et M.A. Van der Does, SPIE vol. 2221, pages 116-127, publié en 1994, décrit de tels moyens de génération et d'animation d'un champ d'étoiles. Ces moyens comprennent un moniteur vidéo monochrome haute résolution dont l'allumage ou l'extinction des pixels de l'écran est commandé par un logiciel de manière à constituer une image d'une portion de ciel étoilé, éventuellement défilante. Il est ainsi possible d'afficher sur l'écran jusqu'à cinquante étoiles de magnitude comprise entre 2 et 8, chacune d'un diamètre apparent de 100 secondes d'arc. Un lentille collimatrice, de 3m de focale, permet de projeter l'image de l'écran sur la surface sensible d'un senseur stellaire destiné à faire partie d'un système de contrôle d'attitude d'un vaisseau spatial.

Le dispositif décrit dans l'article précité est satisfaisant en ce que la collimation du rayonnement issu de l'écran du moniteur, sur la surface sensible du senseur stellaire, est simple à obtenir, du fait que l'écran et cette surface sont fixes l'un par rapport à l'autre.

En outre il permet de représenter convenablement les étoiles, avec une fréquence de rafraîchissement élevée des images affichées sur l'écran. Enfin ce dispositif autorise des tests de longue durée, exigeant donc une simulation longue de portions de ciel défilantes.

Par contre il ne permet pas de simuler un défilement du champ d'étoiles en temps réel, comme cela serait cependant souhaitable pour tester le fonctionnement du senseur dans des conditions aussi proches que possible de la réalité.

En outre il n'est pas prévu, dans la portion de ciel affichée sur l'écran du moniteur, la représentation d'éléments perturbateurs, tels que le Soleil, la Lune, des planètes, la Terre elle-même, alors que de tels éléments peuvent apparaître dans le champ d'un senseur stellaire formant partie d'un système de contrôle d'attitude d'un satellite artificiel. Il convient cependant de s'assurer que la présence de ces corps célestes perturbateurs n'altèrent pas le fonctionnement d'un système de contrôle d'attitude à valider.

Encore, la lentille de grande focale (3m) utilisée dans le dispositif décrit dans l'article précité permet de reconstituer l'image d'une portion de ciel couvrant moins de 3 degrés d'angle, alors que l'on souhaiterait pouvoir constituer une portion de ciel d'au moins 20 degrés d'angle, par exemple, correspondant à l'angle de champ souhaité pour un senseur stellaire incorporé à un système de contrôle d'attitude de fiabilité élevée.

Enfin le matériel utilisé pour constituer ce dispositif (moniteur à très haute résolution, installation dans une salle propre et noire de classe 100K) en fait un matériel de prix élevé.

La présente invention a précisément pour but de réaliser un banc de test au sol d'un senseur stellaire destiné à faire partie d'un système de contrôle d'attitude d'un satellite artificiel, qui ne présente pas ces inconvénients.

On atteint ce but de l'invention, ainsi que d'autres qui apparaîtront à la lecture de la description qui va suivre, avec un banc de test au sol d'un senseur stellaire destiné à faire partie d'un système de contrôle d'attitude d'un satellite artificiel, ledit banc comprenant a) des moyens de support dudit senseur stellaire à tester, b) un moniteur vidéo, c) des moyens de commande de l'affichage, sur ledit moniteur vidéo, d'une portion défilante de ciel, d) des moyens optiques pour former une image dudit écran sur une surface sensible d'un senseur stellaire monté sur lesdits moyens de support, et e) des moyens de conduite de test dudit senseur.

Suivant la présente invention lesdits moyens de commande dudit moniteur vidéo comprennent des moyens de simulation, en temps réel, du mouvement sur une orbite prédéterminée d'un satellite équipé dudit système de contrôle d'attitude, ledit système utilisant en boucle fermée les signaux émis par ledit senseur testé.

Grâce à la simulation en "temps réel" qu'il autorise, le banc suivant l'invention permet d'assurer la "représentativité dynamique" de la simulation, et donc la confiance que l'on peut avoir dans les résultats de cette simulation.

Suivant d'autres caractéristiques du banc selon la présente invention, les moyens de commande comprennent des moyens logiciels pour suréchantillonner des données d'attitude délivrées par lesdits moyens de simulation et pour synthétiser, à partir dudit suréchantillonnage et d'une base de données constituant un catalogue stellaire, des images à afficher successivement sur l'écran du moniteur vidéo, à une cadence prédéterminée.

Suivant une autre caractéristique du banc selon l'invention, les moyens de simulation contiennent les informations de présence de corps célestes perturbateurs, à introduire avec des étoiles dans les images synthétisées en vue de leur affichage sélectif sur l'écran-du moniteur vidéo.

D'autres caractéristiques et avantages du banc suivant la présente invention apparaîtront à la lecture de la description qui va suivre et à l'examen du dessin annexé
dans lequel :
- la figure 1 est un schéma du banc de test suivant l'invention, et
- la figure 2 est un organigramme illustrant le fonctionnement du banc de la figure 1.

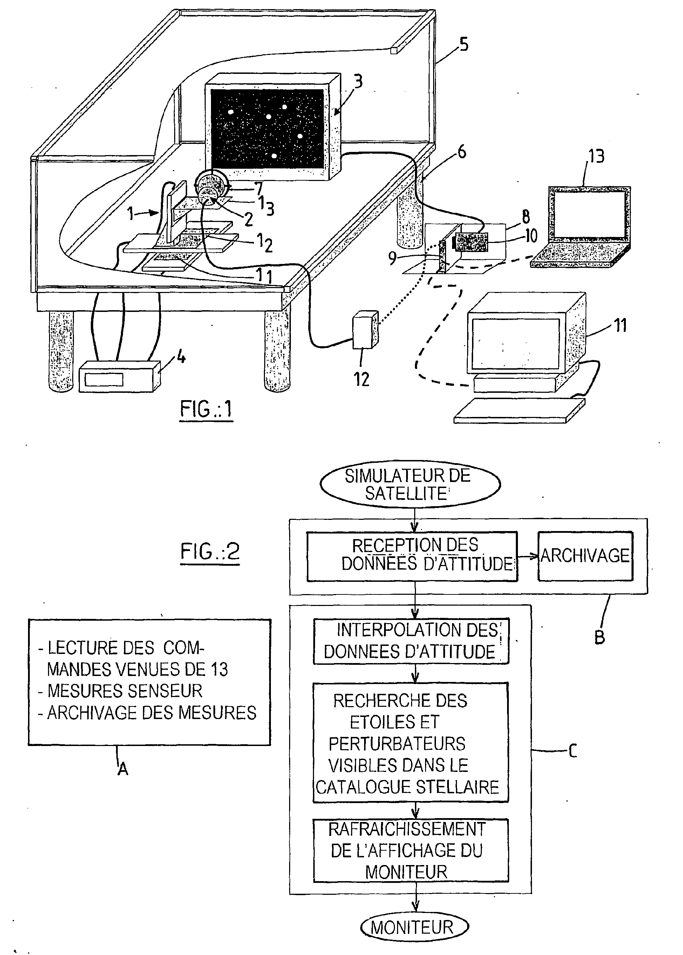

On se réfère à la figure 1 du dessin annexé où il apparaît que le banc de test suivant l'invention comprend tout d'abord des moyens de support 1 d'un senseur stellaire 2 à tester et un moniteur vidéo 3, haute résolution. Le senseur stellaire 2 à tester est d'un type connu, conçu pour délivrer des signaux représentatifs de la position de son axe de visée, connus dans la technique sous le nom de "données d'attitude", et, plus précisément, de "quaternions d'attitude".

Les moyens de support 1 du senseur stellaire 2 à tester sont constitués par trois platines motorisées 1₁, 1₂, 1₃, mobiles chacune selon une direction de l'espace perpendiculaire aux directions de mouvement des deux autres. Un boîtier électronique 4 permet de commander les positions de ces trois platines, et donc celle du senseur.

Les moyens de support 1 et le moniteur 3 sont placés dans une chambre obscure 5 (dont la paroi est partiellement arrachée sur la figure 1), cette chambre obscure étant elle-même posée sur une table optique 6 munie de moyens (non représentés) conçus classiquement pour filtrer d'éventuelles vibrations du sol sur lequel elle repose.

Une lentille collimatrice 7 est montée sur la platine 1₃ coaxialement à la surface sensible du senseur 2, entre celle-ci et l'écran du moniteur vidéo, pour projeter sur cette surface une image de cet écran. La position de cette image sur cette surface sensible peut être réglée avec une grande précision, grâce aux trois platines 1₁, 1₂, 1₃.

Le banc de test comprend encore des moyens de commande de l'affichage, sur l'écran du moniteur vidéo, d'une portion de ciel, éventuellement défilante. Ces moyens sont constitués essentiellement par une électronique de commande (8, 9, 10) et, suivant la présente invention, par des moyens 11 de simulation, en temps réel, du mouvement sur une orbite prédéterminée d'un satellite équipé d'un système de contrôle d'attitude comportant un senseur stellaire conforme à celui pour lequel le banc de test a été conçu.

L'électronique de commande comprend, dans un châssis 8, une unité centrale de traitement de données 9 équipée d'une carte graphique 10 assurant l'interface avec le moniteur vidéo. La sortie du senseur stellaire 2 est connectée à l'unité centrale 9, à travers une électronique 12 associée au senseur.

L'unité centrale de traitement 9 est dûment programmée pour exécuter les processus schématisés par les blocs A, B et C de l'organigramme de la figure 2, processus qui seront décrits dans la suite de la présente description.

Les moyens de simulation sont constitués par un calculateur ou simulateur 11, dûment programmé pour calculer les quaternions d'attitude définissant les positions successives d'un satellite artificiel en mouvement sur une orbite prédéterminée, ce satellite étant équipé d'un système de contrôle d'attitude incorporant un senseur stellaire conforme à celui testé sur le banc suivant l'invention. Le calculateur 11 est relié à l'unité centrale 9 par une liaison Ethernet, par exemple, pour la fourniture à celle-ci des données relatives aux quaternions d'attitude évoqués plus haut. Le calculateur 11 accède aux données contenues dans la sortie du senseur 2, à travers l'unité centrale de traitement de données 9.

Un autre calculateur, constitué par un ordinateur personnel 13, par exemple, connecté à l'unité centrale 9 également par une liaison Ethernet par exemple, sert à conduire les tests exécutés sur le banc.

On décrit dans la suite le fonctionnement du banc, en liaison avec l'organigramme de la figure 2, décrivant les fonctionnalités des 3 processus logiciels A, B, C exécutés par l'unité centrale de traitement de données 9.

Le processus A gère le banc en assurant les communications avec l'ordinateur 13 de conduite de test : commandes d'initialisation, d'exécution, d'arrêt, de lecture des paramètres de configuration. Il assure aussi la lecture des mesures délivrées par le senseur 2, et leur archivage dans l'ordinateur 13 en vue d'un traitement postérieur éventuel de ces données.

Le processus B assure la communication de l'unité centrale 9 avec le simulateur de satellite 11. A ce titre, il assure la réception des quaternions d'attitude calculés par ce dernier et leur archivage sur l'ordinateur 13.

Le processus C réalise toutes les fonctions de calcul permettant l'affichage en temps réel, sur l'écran du moniteur 3, des étoiles et des corps célestes perturbateurs éventuels (Soleil, Lune, planètes, Terre) compris dans la portion de ciel correspondant aux données d'attitude reçues du simulateur 11, compte-tenu évidemment du champ du senseur stellaire 2 à tester, monté sur les moyens de support 1. Le simulateur 11 contient les informations de présence des corps célestes perturbateurs. L'ordre d'afficher ceux-ci lui vient de l'ordinateur de conduite de test 13.

Les données d'attitude fournies par le simulateur 11 sont délivrées à une cadence relativement faible, de l'ordre de 10 Hz par exemple. Celle-ci ne convient pas pour assurer des émissions lumineuses continues par les points ou plages de l'écran du moniteur -qui doivent reproduire les émissions continues d'étoiles ou de corps célestes perturbateurs réels.

Suivant la présente invention, on pallie cet inconvénient en suréchantillonnant par interpolation les données d'attitude fournies par le simulateur 11, de manière que la cadence de fourniture des données suréchantillonnées atteigne une valeur suffisante, 40 Hz au minimum, compatible avec l'obtention d'une émission lumineuse suffisamment continue par l'écran du moniteur 3.

Les images à afficher sur cet écran sont synthétisées à l'aide d'une base de données constituant un catalogue d'étoiles et de perturbateurs, les images ainsi synthétisées étant rafraîchies à la cadence de 40 Hz pour présenter au senseur stellaire 2 à tester, monté sur la table 6, une image d'une portion de ciel défilante reproduisant fidèlement celle qui serait vue par ce senseur s'il formait partie d'un système de contrôle d'attitude d'un satellite artificiel circulant sur une véritable orbite.

Le banc suivant l'invention permet de procéder à des test variés du senseur stellaire. On peut ainsi comparer les séries de données d'attitude délivrées par le simulateur et celles délivrées par le senseur testé, ces séries étant archivées en parallèle dans l'ordinateur 13. Il s'agit là, en quelque sorte, d'un test en "boucle ouverte".

Suivant la présente invention, on réalise également des tests en temps réel et en boucle fermée, en bouclant les données de mesure fournies par le senseur testé 2 sur le simulateur de satellite 11. Ce bouclage est rendu possible par le fait que le senseur 2 et le simulateur 11 sont tous deux connectés à l'unité centrale de traitement de données 9.

Le senseur 2, d'après les étoiles présentes dans son champ de vue, fournit les données d'attitude au simulateur 11 qui, après calcul des conditions d'environnement, en déduit la commande corrective à appliquer au satellite pour rattraper une attitude de consigne. Cette attitude est exploitée par l'unité de traitement de données 9 pour calculer le ciel correspondant que verrait le senseur dans une telle situation en orbite et pour l'afficher sur le moniteur haute résolution. Le simulateur 11 est dûment programmé pour simuler alors le fonctionnement d'un système de contrôle d'attitude réel incorporant un senseur réel dans la boucle de commande. On peut évaluer alors les performances (dynamique, stabilité, etc...) de l'asservissement ainsi mis en oeuvre.

Divers tests peuvent être réalisés sur le banc. A titre d'exemple illustratif et non limitatif, on peut citer des tests d'erreur de pointage, des tests de performances temporelles telles que l'acquisition d'étoiles à partir d'un mode "lost in space" (perdu dans l'espace) ou de poursuite d'étoiles, des tests de sensibilité aux perturbations du système de contrôle d'attitude, des tests permettant d'évaluer l'adéquation du système à sa mission (taux de disponibilité de la mesure stellaire pour le système de contrôle d'attitude, en phase de manoeuvre, par exemple).

Toujours à titre d'exemple illustratif et non limitatif seulement, on donne ci-dessous les caractéristiques des matériels utilisés pour constituer un mode de réalisation particulier du banc de test suivant l'invention.

On a utilisé un moniteur couleur haute résolution du commerce (1600 x 1200 pixels) à dalle plate et fréquence de rafraîchissement maximal de 80 Hz. La dalle plate supprime toute distorsion due à la courbure de l'écran. La couleur donne plus de liberté pour étalonner les magnitudes des corps célestes à afficher sur l'écran.

La lentille 7 collimatrice présente une focale de 900 mm environ permettant de couvrir un champ large, de 20° x 30° environ, avec un diamètre minimum d'étoiles de 51 secondes d'arc. On notera l'élargissement du champ par rapport à celui (3° environ) du dispositif de la technique antérieure décrit en préambule de la présente description, cet élargissement étant favorable à l'amélioration de l'autonomie d'un système de contrôle d'attitude incorporant un senseur conforme à celui testé sur le banc.

Pour constituer le simulateur 11, on a utilisé un poste de travail SUN SPARC ULTRA 60, de la société des USA dite SUN MICROSYSTEMS. Ce poste de travail a également permis le développement du logiciel nécessaire pour assurer la simulation du satellite et de son environnement. Il s'agit d'un logiciel de calcul et de mise en forme d'une matrice de points à afficher, correspondant à une portion de ciel simulée en fonction des caractéristiques du satellite et de son environnement.

Pour séquencer et contrôler l'exécution de ces logiciels en temps réel, on a utilisé le système d'exploitation VXWORKS/TORNADO de la société des USA dite WINDRIVER SYSTEM.

L'unité centrale de données 9 est constituée par une carte FORCE 50 de la société des USA dite FORCE, alors que la carte graphique 9 est une carte PMC VFX-M de la société des USA dite PERITEK.

Il apparaît maintenant que l'invention permet bien d'atteindre les buts annoncés, à savoir perfectionner la technique antérieure des bancs de test de senseur stellaire notamment par l'introduction de moyens de test en temps réel et en boucle fermée, permettant de placer le senseur dans un environnement simulant au plus près un système réel de contrôle d'attitude de satellite artificiel, de tels tests permettant de fiabiliser un tel système.

Le banc suivant l'invention permet aussi de simuler une portion de ciel de grande ouverture angulaire, incluant de manière particulièrement réaliste, outre de nombreuses étoiles, des corps tels que (le Soleil, la Lune, la Terre, des planètes). Les tests exécutés à l'aide du banc suivant la présente invention permettent ainsi d'identifier les situations dans lesquelles ces corps sont susceptibles de perturber le fonctionnement du système de contrôle d'attitude, en vue d'y porter remède. Enfin le banc suivant l'invention n'a pas à être installé dans une salle propre de classe 100K, contrairement à celui décrit en préambule de la présente description, ce qui en fait un matériel de prix moins élevé.

## Revendications

1. Banc de test au sol d'un senseur stellaire (2) destiné à faire partie d'un système de contrôle d'attitude d'un satellite artificiel, ledit banc comprenant :
a) des moyens de support (1) dudit senseur stellaire (2) à tester,
b) un moniteur vidéo (3),
c) des moyens de commande (8, 9, 10, 11) de l'affichage, sur ledit moniteur vidéo (3), d'une portion défilante de ciel,
d) des moyens optiques (7) pour former une image dudit écran sur une surface sensible d'un senseur stellaire (2) monté sur lesdits moyens de support (1), et
e) des moyens (13) de conduite de test dudit senseur (2), ledit banc étant **caractérisé en ce que** lesdits moyens de commande (8, 9, 10, 11) dudit moniteur vidéo (3) comprennent des moyens de simulation (11), en temps réel, du mouvement sur une orbite prédéterminée d'un satellite équipé dudit système de contrôle d'attitude, ledit système utilisant en boucle fermée les signaux émis par ledit senseur testé (2), lesdits moyens de simulation (11) contenant des informations de présence de corps célestes perturbateurs, à introduire avec des étoiles dans les images synthétisées en vue de leur affichage sélectif sur l'écran dudit moniteur vidéo (3).

2. Banc de test conforme à la revendication 1, **caractérisé en ce que** lesdits moyens de commande (8, 9, 10, 11) comprennent des moyens logiciels (C) pour sur-échantillonner des données d'attitude délivrées par lesdits moyens de simulation (11) et pour synthétiser, à partir dudit suréchantillonnage et d'une base de données constituant un catalogue stellaire, des images à afficher successivement sur l'écran dudit moniteur vidéo (3), à une cadence prédéterminée.

3. Banc de test conforme à l'une quelconque des revendications 1 à 2, **caractérisé en ce que** lesdits moyens de conduite de test (13) comprennent des moyens d'archivage des données d'attitude délivrées par lesdits moyens de simulation (11).

4. Banc de test conforme à l'une quelconque des revendications 1 à 3, **caractérisé en ce que** lesdits moyens de conduite de test (13) comprennent des moyens d'archivage des données d'attitude délivrées par ledit senseur stellaire testé (2).

5. Banc de test conforme à l'une quelconque des revendications 1 à 4, **caractérisé en ce que** lesdits moyens de support (1) dudit senseur stellaire testé (2) comprennent trois platines (1₁, 1₂, 1₃) mobiles chacune selon une direction perpendiculaire aux directions de mouvement des deux autres.

## Claims

1. Test bench on the ground for a stellar sensor (2) which is designed to form part of a system for control of the attitude of an artificial satellite, the said bench comprising:
a) means (1) for support of the said stellar sensor (2) to be tested;
b) a video monitor (3);
c) means (8, 9, 10, 11) for controlling the display, on the said video monitor (3), of a passing portion of sky;
d) optical means (7) for forming an image of the said screen on a sensitive surface of a stellar sensor (2) which is fitted on the said support means (1) ; and
e) means (13) for carrying out testing of the said sensor (2), the said bench being **characterised in that** the said means (8, 9, 10, 11) for controlling the said video monitor (3) comprise means (11) for simulation, in real time, of the movement on a predetermined orbit of a satellite equipped with the said attitude control system, the said system using in a closed loop the signals emitted by the said sensor tested (2), the said simulation means (11) containing information on the presence of disruptive celestial bodies, to be entered together with that of the stars in the images synthesised, so that they can be displayed selectively on the screen of the said video monitor (3).

2. Test bench according to claim 1, **characterised in that** the said control means (8, 9, 10, 11) comprise software means (C) for over-sampling of the attitude data supplied by the said simulation means (11) and in order, on the basis of the said over-sampling and a data base which constitutes a stellar catalogue, to synthesise images to be displayed in succession on the screen of the said video monitor (3), at a predetermined rate.

3. Test bench according to either of claims 1 and 2, **characterised in that** the said means (13) for carrying out testing comprise means for filing of attitude data supplied by the said simulation means (11).

4. Test bench according to any one of claims 1 to 3, **characterised in that** the said means (13) for carrying out testing comprise means for filing of attitude data supplied by the said stellar sensor (2) tested.

5. Test bench according to any one of claims 1 to 4, **characterised in that** the said support means (1) for the said stellar sensor (2) tested comprise three plates (1₁, 1₂, 1₃) which are each mobile according to a direction perpendicular to the directions of movement of the other two plates.

## Patentansprüche

1. Bodenprüfbank für einen Stellarsensor (2), der zur Verwendung als Teil eines Systems zum Steuern der Lage eines künstlichen Satelliten vorgesehen ist, wobei die Bank aufweist:
a) Einrichtungen (1) zum Stützen des zu prüfenden Stellarsensors (2),
b) einen Videomonitor (3),
c) Einrichtungen (8, 9, 10, 11) zum Steuern der Anzeige eines vorbeiziehenden Bereichs des Himmels auf dem Videomonitor (3),
d) optische Einrichtungen (7) zum Erstellen einer Abbildung des Bildschirms auf einer empfindlichen Fläche eines auf der Stützeinrichtung (1) angebrachten Stellarsensors (2),
e) Einrichtungen (13) zum Durchführen der Prüfung des Sensors (2), wobei die Bank **dadurch gekennzeichnet ist, dass** die Einrichtungen (8, 9, 10, 11) zum Steuern des Videomonitors (3) Einrichtungen (11) zum Echtzeit-Simulieren der Bewegung eines mit dem Lagesteuersystem versehenen Satelliten auf einer vorbestimmten Umlaufbahn, wobei das System die von dem geprüften Sensor (2) ausgesandten Signale in einer geschlossenen Schleife verwendet, wobei die Simulationseinrichtungen (11) Informationen über das Vorhandensein störender Himmelskörper enthalten, welche mit den Sternen zur selektiven Anzeige auf dem Schirm des Videomonitors (3) in die synthetisierten Bilder einzubringen sind.

2. Prüfbank nach Anspruch 1, **dadurch gekennzeichnet, dass** die Steuereinrichtungen (8, 9, 10, 11) Programmeinrichtungen (C) aufweisen, um von den Simulationseinrichtungen (11) gelieferte Lagedaten überabzutasten und, ausgehend von den Überabtastungen und einer einen Sternenkatalog bildenden Datenbank, Bilder zu synthetisieren, welche mit einer vorbestimmten Kadenz aufeinanderfolgend auf dem Schirm des Videomonitors (3) angezeigt werden.

3. Prüfbank nach einem der Ansprüche 1 bis 2, **dadurch gekennzeichnet, dass** die Einrichtungen (13) zum Durchführen der Prüfung Einrichtungen zum Archivieren der von den Simulationseinrichtungen (11) gelieferten Lagedaten aufweisen.

4. Prüfbank nach einem der Ansprüche 1 bis 3, **dadurch gekennzeichnet, dass** die Einrichtungen (13) zum Durchführen der Prüfung Einrichtungen zum Archivieren der von dem geprüften Stellarsensor (2) gelieferten Lagedaten aufweisen.

5. Prüfbank nach einem der Ansprüche 1 bis 4, **dadurch gekennzeichnet, dass** die Stützeinrichtungen (1) des geprüften Stellarsensors (2) drei Platinen (I₁, I₂, I₃) aufweisen, die jeweils in einer zu den Bewegungsrichtungen der anderen beiden Platinen senkrechten Richtung bewegbar ist.
